# EUROPÄISCHE PATENTSCHRIFT

(11) **EP 2 183 193 B1**
(45) Veröffentlichungstag und Bekanntmachung des Hinweises auf die Patenterteilung: **07.12.2016**
(21) Anmeldenummer: 08784792.7
(22) Anmeldetag: 16.07.2008
(51) Int. Cl.: C04B 7/345

(54) **EINPHASIGES HYDRAULISCHES BINDEMITTEL, HERSTELLUNGSVERFAHREN UND DAMIT HERGESTELLTER BAUSTOFF**
SINGLE-PHASE HYDRAULIC BINDER, METHODS FOR THE PRODUCTION THEREOF AND BUILDING MATERIAL PRODUCED THEREWITH
LIANT HYDRAULIQUE MONOPHASIQUE, PROCÉDÉS DE PRODUCTION ET MATÉRIAU DE CONSTRUCTION FABRIQUÉ AVEC CE LIANT

(30) Priorität: 27.07.2007 DE 102007035257
(43) Veröffentlichungstag der Anmeldung: 12.05.2010
(73) Patentinhaber: Karlsruher Institut für Technologie, 76131 Karlsruhe (DE)
(72) Erfinder: BEUCHLE, Günter, 76185 Karlsruhe (DE); STEMMERMANN, Peter, 76149 Karlsruhe (DE); SCHWEIKE, Uwe, 76185 Karlsruhe (DE); GARBEV, Krassimir, 76344 Eggenstein-Leopoldshafen (DE)
(74) Vertreter: FDST Patentanwälte
(86) Internationale Anmeldenummer: PCT/EP2008/005784
(87) Internationale Veröffentlichungsnummer: WO 2009/015769

(56) Entgegenhaltungen:
- WO-A-2007/017142
- DD-A1- 117 437
- DE-C- 266 277
- US-A- 5 804 175
- US-A1- 2004 089 203
- GUOKUANG SUN, ADRIAN R. BROUGH & J. FRANCIS YOUNG: "29Si NMR Study of the Hydration of Ca3SiO5 and beta-Ca2SiO4 in the Presence of Silica Fume" JOURNAL OF THE AMERICAN CERAMIC SOCIETY, Bd. 82, Nr. 11, 1999, Seiten 3225-3230, XP002501669
- GARBEV,K. & STEMMERMANN, P.: "Structural Features of C-S-H (I) and its Carbonation in Air-A Raman Spectroscopic Study. Part I: Fresh Phases" JOURNAL OF THE AMERICAN CERAMIC SOCIETY, Bd. 90, Nr. 3, März 2007 (2007-03), Seiten 900-907, XP002501670
- FRIEDRICH WILHELM LOCHER: "Cement: Principles of Prodution and Use" 2006, VERLAG BAU + TECHNIK GMBH , DÜSSELDORF , XP002501672 Seite 354 - Seite 356; Abbildung 8.32
- Z. BOUDAOUD & D. BREYSSE: "Études des effets du cobroyage d'un sable et d'un clinker sur les propriétés d'un béton de sable" MATERIALS AND STRUCTURES/MATÉRIAUX ET CONSTRUCTIONS, Nr. 35, Juni 2002 (2002-06), Seiten 310-316, XP008097857

## Beschreibung

Die Erfindung betrifft ein einphasiges hydraulisches Bindemittel, ein Gemisch, das ein derartiges Bindemittel enthält, Verfahren zur Herstellung des Bindemittels und des Gemischs sowie einen Baustoff, der mit dem Bindemittel oder dem Gemisch hergestellt wurde.

Die hydraulische Reaktivität beschreibt die Reaktion eines Bindemittels mit Wasser unter Ausbildung eines festen Materials. Die Definition dieses Vorgangs erfolgt in Anlehnung an die bislang bekannten hydraulischen Bindemittel wie z.B. Portlandzement. Nach Härig, Günther, in Klausen, Technologie der Baustoffe, C.F. Müller Verlag, Heidelberg, 1996, S. 53, erhärten hydraulische Bindemittel nach Wasserzugabe sowohl an Luft als auch unter Wasser. Nach H.F.W. Taylor, The chemistry of cements, Academic Press, London 1964, S. 2f, ist *Zement* ein *hydraulisches Bindemittel,* das, mit Wasser zu einer Paste (Ze*mentleim*) angerührt, in Folge von chemischen Reaktionen zwischen dem Wasser und den im Zement vorhandenen Verbindungen selbständig ansteift und zu *Zementstein* aushärtet. Das Ansteifen und Aushärten hängen dabei weder von einer Trocknung noch von Reaktionen mit dem CO₂ aus der Luft ab. Die Reaktion läuft daher sowohl an Luft als auch unter Wasser ab.

Weiterhin sind latenthydraulische (sog. puzzolanische) Bindemittel bekannt. Nach Härig (s.o.) erhärten diese nach Wasserzugabe nur bei Anwesenheit eines Anregers. Zum Start der Abbindereaktion wird dann z.B. Kalkhydrat oder Portlandzement hinzu gegeben; es findet jedoch keine selbständige Reaktion statt. Ein typisches Beispiel für solche latent hydraulischen Bindemittel sind Hüttensande mit einem Massenverhältnis (CaO + MgO):SiO₂ von > 1 (EN 197-1:2000, Abschnitt 5.2.2).

Bisher bekannte hydraulische Bindemittel auf Silikatbasis enthalten kein molekulares Wasser, ihre hydraulischen Komponenten enthalten in ihrer Summenformel keinen Wasserstoff und die hydraulischen Komponenten bestehen überwiegend aus kristallinen (Erd-)Alkalisilikaten. Die Silikatanionen der hydraulisch aktiven Phasen liegen nach H.F.W. Taylor, The chemistry of cements, Academic Press, London 1964, S. 2f, in Form einzelner isolierter oder *monomerer* Silikat-Tetreaeder vor (Q⁰). Ausnahme ist die seltene Phase Belinit, die ein Ringsilikat ist und Chlor enthält. In Belinit ist jedes Silikattetraeder über gemeinsame Sauerstoffe mit zwei weiteren Silikattetraedern verbunden (Q²). Alle bisher bekannten hydraulischen Bindemittel auf Silikatbasis besitzen ein molares Verhältnis CaO:SiO₂ von mindestens zwei.

Derartige hydraulische Bindemittel werden rein oder vermischt mit anderen Stoffen als *Zement* vielfältig zur Herstellung von festen Baustoffen wie Beton, Mörtel oder in Spezialbindern, eingesetzt. Technische Bedeutung besitzen darüber hinaus zwei weitere Typen von meist höher kondensierten silikatischen und amorphen (aber nicht hydraulischen) Bindemitteln, nämlich einerseits Wassergläser und andererseits latent hydraulische bzw. pozzulanische Materialien wie Hochofenschlacken, Flugaschen usw.
*1. Zement* wird durch gemeinsames Brennen von Calciumkarbonat und einem Silikatträger bei ca. 1450 °C zu einem Produkt hergestellt, das als *(Zement-)Klinker* bezeichnet wird und im Wesentlichen aus den hydraulisch reaktiven Klinkerphasen Tricalciumsilikat (Alit, Ca₃SiO₅), Dicalciumsilikat (Belit, vor allem ß-Ca₂SiO₄) und untergeordnet Tricalciumaluminat Ca₃Al₂O₆ und Calciumaluminatferrit Ca₄(Al,Fe)₄O₁₀ besteht. Durch Mahlen und Zusetzen weiterer Stoffe, vor allem von Gips oder Anhydrit als Reaktionsverzögerer, wird so genannter *Portlandzement* (CEM I) erhalten. CEM I wird oft mit latent hydraulischen Silikaten zu den Zementtypen CEM II bis CEM V vermahlen. Durch das Mahlen wird eine höhere Oberfläche erzeugt, was die Geschwindigkeit der hydraulischen Reaktion beschleunigt. Nach DIN 1164 besteht Portlandzement aus 61% bis 69% Calciumoxid CaO, 18% bis 24% Siliziumdioxid SiO₂, 4% bis 8% Aluminiumoxid Al₂O₃ und 1% bis 4% Eisenoxid Fe₂O₃.
2. Weiterhin werden so genannte Wassergläser hergestellt. Hierbei handelt es sich um feste, aber wasserlösliche Gläser aus Alkalioxiden und SiO₂, die bei ca. 1400 °C erschmolzen werden. Wassergläser werden als konzentrierte, stark alkalische Lösungen oder Pulver eingesetzt.
3. Darüber hinaus lassen sich silikatische Ausgangsstoffe durch Reaktion mit einer Lauge zu einem Bindemittel umsetzen, wobei Alkalihydroxide als Laugen dienen. Das entstehende Produkt wird meist als Geopolymer bezeichnet, besitzt jedoch nur eine geringe wirtschaftliche Bedeutung.

Die Typen 2 und 3, Wassergläser und Geopolymere, sind nur bedingt als hydraulische Bindemittel im Sinne der eingangs aufgeführten Definition zu sehen, da sie entweder schon als Lösung, also nicht fest, vorliegen bzw. wegen ihrer hohen Wasserlöslichkeit unter Wasser nicht erhärten (Alkalisilikate) oder als Feststoffe nicht reaktiv sind und zum Anstoß der hydraulischen Reaktion Zusätze wie CEM I oder Lauge benötigen. Sie erfordern zu ihrer Herstellung sowohl besondere Ausgangsmaterialien als auch jeweils mehrere aufwändige Verfahrensschritte, wodurch ihre Herstellung teuer ist. Gleichzeitig ist ihre Verträglichkeit mit verschiedenen Zusätzen aufgrund des sehr hohen pH-Wertes äußerst eingeschränkt und die meist sehr langsame Reaktionsgeschwindigkeit kann nicht wirksam beeinflusst, insbesondere nicht beschleunigt werden. Wegen der eingeschränkten Verarbeitbarkeit (langsame Erhärtung, stark alkalische Reaktion) und der geringen Festigkeit ist ihr Anwendungsspektrum daher begrenzt.

Das bekannteste und am häufigsten eingesetzte hydraulische Bindemittel ist Zement, insbesondere Portlandzement. Der für die Herstellung des Vorprodukts Zementklinker bei Temperaturen bis zu ca. 1450 °C notwendige Brennprozess ist nach H.F.W.Taylor, Cement chemistry, Academic Press, London 1990, S. 64f, mit einer theoretischen Reaktiosenthalpie von + 1761 kJ pro kg Zementklinker besonders energieintensiv. Der Löwenanteil des Energiebedarfs entfällt auf die Entsäuerung (oder Dekarbonatisierung) von Calciumkarbonat, das aus Kalkstein, Kalkmergeln oder anderen kalkhaltigen Materialien stammt. Die unter Freisetzung von CO₂ verlaufende Reaktion trägt mit einer Reaktionsenthalpie von + 2138 kJ pro kg Zementklinker stark endotherm zur Gesamtreaktion bei.

Zur Herstellung von 1 kg Portlandzement sind etwa 1,2 kg Kalk erforderlich. Zusätzlich ist zur Bildung der hydraulisch aktiven Klinkerphasen Alit, Belit, Tricalciumaluminat und Calciumaluminatferrit die teilweise Aufschmelzung der Ausgangsmaterialien nötig. Für das Endprodukt Portlandzement ergibt sich als Summe des theoretischen Energiebedarfs, der Wärmeverluste, der Mahlenergie etc. ein tatsächlicher Gesamtenergieaufwand von ca. + 4300 kJ pro kg.

Bei der Herstellung von Portlandzement werden aus den calciumcarbonathaltigen Ausgangsmaterialien erhebliche Mengen an CO₂, freigesetzt, die in Summe etwa 850 g CO₂ pro kg Klinker betragen.

Die Reaktion von Portlandzement mit Wasser führt zur Verfestigung (Aushärtung). Hierbei entstehen nach H.F.W.Taylor, Cement chemistry, Academic Press, London 1990, S. 218, C-S-H-Gele, d.h. schlecht kristalline Calcium-Silikat-Hydrate, sowie Calcium-Aluminat-Hydrate und Portlandit Ca(OH)₂. Letzterer ist eine notwendige Folge der Abbindereaktion und tritt mit einem Anteil von ca. 20 Gew.% im abgebundenen, d.h. ausgehärteten Zementstein auf.

Der Gesamt-Calcium-Gehalt in Portlandzement allgemein und besonders im Vorprodukt Klinker kann nicht wesentlich erniedrigt werden, da sonst die hydraulische Reaktivität stark zurückgeht. Der Gesamt-Calcium-Gehalt liegt, als molares Ca:Si-Verhältnis ausgedrückt, das im Übrigen mit dem molaren (CaO):(SiO₂)-Verhältnis identisch ist, stets bei 3,0 +/- 0,2. Die in Zementstein aus Portlandzement vorliegende Bindemittelmatrix aus C-S-H-Gel, die im wesentlichen aus der Reaktion von Tricalciumsilikat Ca₃SiO₅ stammt, besitzt ein molares Ca:Si-Verhältnis von 1,7 bis 1,8. Das überschüssige CaO liegt nach der Hydratation als Portlandit Ca(OH)₂ vor.

Portlandit trägt nur unwesentlich zur mechanischen Stabilität des Baustoffs bei. Vielmehr bestimmt Portlandit in der Nutzungsphase des Zements den pH-Wert des Baustoffes, der dann bei etwa pH 12,5 liegt. Säureangriffe werden zunächst durch Portlandit gepuffert; ist dieser jedoch aufgebraucht, indem er z.B. durch CO₂ in CaCO₃ umgewandelt ist, sinkt der pH-Wert und die Bindemittelmatrix aus C-S-H-Gel wird angegriffen und zersetzt.

Eine Hemmung der Reaktion kann durch ein möglichst dichtes Gefüge und damit eine geringe Stofftransportgeschwindigkeit erreicht werden. Die Lösung von Portlandit selbst generiert jedoch neue Angriffsmöglichkeiten. Die Pufferung des pH-Wertes in Zement durch Portlandit stellt somit einen eingeschränkten Korrosionsschutz für Baustahl dar. Die durch Portlandit generierte hohe Alkalität verhindert dagegen den Einsatz von Basen- oder Alkali-empfindlichen Zusätzen in zementgebundenen Baustoffen, wie z.B. organischen Fasern. Für den Korrosionsschutz wäre ein pH-Wert von über 9,5 ausreichend.

Portlandzement zeigt beim Abbinden eine hohe Reaktionsenthalpie, die im Wesentlichen aus der Bildung von Portlandit stammt, und zu Wärmestaus in großen, massigen oder voluminösen Bauteilen führt. Die Wärmeentwicklung pro Zeiteinheit kann durch Verlangsamung des Reaktionsumsatzes mittels Kornvergrößerung, Zusatzmittel oder Verdünnung mit Flugaschen vermindert werden. Dies bremst allerdings auch die Festigkeitsentwicklung.

Die Festigkeit von Zementstein wird durch die Hauptkomponente C-S-H-Gel bestimmt, die nur etwa 50 Gew.% ausmacht. Daher beträgt der effektive Energieaufwand zur Herstellung der festigkeitsbestimmenden Bestandteile von Zementstein aus Portlandzement ca. 8600 kJ pro kg. Die andere Hälfte des Zementsteins, im wesentlichen Calciumaluminathydrate und Portlandit, trägt zur Festigkeit des Werk- oder Baustoffs kaum bei und ist, bezogen auf die Festigkeit, ein unerwünschtes Nebenprodukt. Die Portlanditmenge kann in technischen Systemen nachträglich durch die Beimischung von Mikrosilica oder latent hydraulischen Stoffen reduziert werden. Überschüssiger Portlandit reagiert dann langsam unter Verbrauch von Microsilica zu zusätzlichen Calcium-Silikat-Hydraten weiter. Dieser Prozess ist allerdings aufwändig und teuer.

C-S-H-Gele können darüber hinaus Calcium in variablen Mengen einbauen. Mit zunehmendem Calciumgehalt sinkt der Vernetzungsgrad der zugehörigen Silikat-Baueinheiten und damit ihr Beitrag zur Festigkeit des Baustoffes sowie ihre chemische Beständigkeit. In abgebundenem Portlandzementstein liegen die C-S-H-Gele mit einem molaren Ca:Si-Verhältnis von 1,7 bis 1,8 vor. Calcium-Silikat-Hydrate existieren dagegen in einem Bereich des molaren Ca:Si-Verhältnisses von 0,5 bis 3,0. Dies wird durch natürlich vorkommende oder synthetisch hergestellte Feststoffe belegt.

Aus den genannten Gründen wäre es daher sinnvoll, in einem ausgehärteten, hydraulischen Bindemittel im Allgemeinen und in Zementstein aus Portlandzement im Besonderen C-S-H-Gele mit niedrigem Calciumgehalt anzustreben. Allerdings führt bereits eine geringe Reduktion des Calciumgehalts bei der Produktion von Portlandzementklinker im Drehrohrofen zu reaktionsträgen Calciumsilikaten, insbesondere zu einer Erhöhung des Gehalts an Belit. Eine weitere Senkung des Calciumgehalts führt zu hydraulisch inaktiven Produkten wie Wollastonit β-CaSiO₃, Pseudowollastonit α-CaSiO₃, oder Rankinit Ca₃Si₂O₇. Auf diese Weise, also auf einer "Klinkerroute", sind calciumarme hydraulische Bindemittel nicht zu erhalten.

In G. Sun, A. R. Brough, J. F. Young, 29Si NMR Study of the Hydration of Ca3SiO5 and β-Ca2SiO4 in the Presence of Silica Fume, J. Am. Ceram. Soc., 82 (11), 3225-3230 (1999*)* wird die Hydratation von Mischungen aus Ca₃SiO₅ und β-Ca₂SiO₄ mit verschiedenen Anteilen an Quarzstaub ("Silica Fume") untersucht. Die Ausgangsstoffe werden vermischt. In den Mischungen resultieren durch die verschiedenen Anteile an Quarz unterschiedliche Verhältnisse der Vernetzungsgrade Q₀ (C₂S und C₃S) und Q₄ (Quarz). Die Ausgangsmischungen sind wasserfrei. Die Mischungen werden unter Methanol vermahlen und anschließend bei 60°C getrocknet. Die getrocknete Masse wird anschließend pulverisiert. Die resultierenden Mischungen werden mit deionisiertem Wasser versetzt und die Hydratation bei 21°C beobachtet. Dazu werden Proben mit verschiedenen Hydratisierungsgraden entnommen, gemahlen und mittels ²⁹NMR-Spektroskopie untersucht. Dabei wird insbesondere das Auftauchen einer Spezies mit einem Vernetzungsgrad von Q³ beobachtet, welche einer Dreierkette von Silikat-Einheiten im entstandenen Calcium-Silikat-Hydrat (C-S-H) zugeordnet wird.

In K. Garbev, P. Stemmermann, L. Black, C. Breen, J. Yarwood, B. Gasharaova, Structural Features of C-S-H(I) and Its Carbonation in Air - A Raman Spectroscopic Study. Part I: Fresh Phaes, J. Am. Ceram. Soc., 90 (3), 900 - 907 (2007) werden mechanochemisch präparierte Calcium-Silikat-Hydrate vom Typ C-S-H(I) mittels Raman-Spektroskopie untersucht. Es werden dazu nanokristalline C-S-H(I)-Phasen unter Stickstoff mechanochemisch aus stöchiometrischen Mischungen von CaO und SiO₂ (Aerosil) hergestellt. Die Oxide werden unter Zugabe von destilliertem Wasser in einer Kugelmühle für 36 h vermahlen. Anschließend werden die Aufschlämmungen bei 60°C für 120 h getrocknet. Proben mit verschiedenen C/S-Verhältnissen werden untersucht. Die C-S-H(I) Phasen sind nicht hydraulisch aktiv.

Hasegawa et al. beschreiben in Mechano-radicals produced from ground quartz and quartz glass, Powder Tech. 85 (1995) S. 269, Veränderungen, die beim Mahlen von Quarz auftreten, indem sie Fehlstellen an der Quarzoberfläche durch spektroskopische Verfahren nachweisen. Dabei entstehen keine hydraulischen Bindemittel.

Carmody et al. weisen in Modification of kaolinite surfaces through mechano-chemical activation with quartz: a diffuse reflectance infrared fourier transform and chemometrics study, Appl. Spectroscopy 60 (2006), S. 1414, die Veränderungen von Kaolinit-Oberflächen durch gemeinsames Mahlen mit Quarz nach. Auch hier entsteht keine neue Phase, die hydraulisch reaktiv ist.

Justnes et al. beschreiben in Mechanism for performance of energetically modified cement versus corresponding blended cement, Cem. Concr. Res. 35 (2005), S. 315, das gemeinsame Mahlen von Zement mit Quarz und die dabei auftretende Verringerung der Korngröße beider Mischungspartner. Wiederum entsteht keine neue Phase. Quarz wird ausdrücklich als nicht reaktiver Füllstoff bezeichnet.

Die US 3,066,031 A offenbart ein zementäres Bindemittel und ein Verfahren zu seiner Herstellung, dass auf dem gemeinsamen Vermahlen von CaO und oxidischen Materialien wie SiO₂ und/oder Al₂O₃ beruht. Der essentielle Bestandteil CaO wird in Form von gebranntem Kalk eingesetzt. Durch das Mahlen wird der CaO-Anteil zu mindestens 50% in eine Form überführt, die bei Reaktion mit Wasser weniger Wärme freisetzt als reines CaO. Das Bindemittel enthält neben dem Anreger CaO gemahlene, latent hydraulische Alumosilikate. In der US 4,217,143 A wird eine besondere Ausgestaltung dieses Verfahrens beschrieben.

In der US 4,605,443 A ist ein amorphes hydraulisches Bindemittel offenbart, dass aus einem gemahlenen reaktiven, aus der Schmelzphase hergestellten Glas mit hohem Al₂O₃-Gehalt besteht und ein molares Verhältnis Al:Si größer als 0,95 aufweist. Das hydraulische Verhalten wird mit dem hohen Aluminiumgehalt begründet.

Die DE 10 2005 018 423 A1 offenbart ein Verfahren zur Herstellung von Bauteilen, wobei es sich bei dem hierfür eingesetzten Bindemittel um vollständig hydratisierte Verbindungen handelt, deren Verfestigung nicht hydraulisch, sondern durch Verpressen erfolgt. Dabei kondensieren Silanol-Einheiten unter Abspaltung von Wasser.

Aus der DE 22 22 545 B2 ist ein Verfahren zur Herstellung eines wasserhaltigen Calciumsilikats des Xonotlit-Typs bekannt, wobei der Xonotlit kristallin ist. Das in diesem Patent beschriebene amorphe Vorprodukt ist, bedingt durch die hydrothermale Herstellung, ein nicht hydraulisch erhärtendes Hydrat.

Die EP 0 500 840 B1 offenbart Tektoalumosilikat-Zement sowie ein zugehöriges Herstellungsverfahren, wobei das Tektoalumosilikat einen Vernetzungsgrad von Q⁴ aufweist. Die hydraulische Erhärtung von entsprechenden Verbindungen basiert zudem nicht auf der Bildung von C-S-H-Phasen.

Gemäß der DE 195 48 645 A1, die ein Verfahren zur Herstellung von Sekundärrohstoffen aus Abbruchmaterial beschreibt, wird Betonabbruch durch Mahlen aktiviert. Es wird jedoch derart gemahlen, dass kein hydraulisches Produkt entsteht, sondern ein Produkt, das als Zementrohmehlkomponente verwendet werden kann. Durch die Verwendung von Betonabbruch ist in der Ausgangskomponente zudem ein Sulfatträger enthalten, der als Reaktionsprodukt die Herstellung eines einphasigen Produktes verhindern dürfte.

Ausgehend hiervon ist es die Aufgabe der vorliegenden Erfindung, ein einphasiges hydraulisches Bindemittel, ein Gemisch, das ein derartiges Bindemittel enthält, Verfahren zur Herstellung des Baustoffs und des Gemischs sowie einen Baustoff, der mit dem Bindemittel oder dem Gemisch hergestellt wurde vorzuschlagen, die die vorher genannten Nachteile und Einschränkungen nicht aufweisen.

Insbesondere soll ein einphasiges hydraulisches Bindemittel auf Silikatbasis und ein dieses Bindemittel enthaltendes Gemisch bereitgestellt werden, das im Vergleich zu herkömmlichem Portlandzement bzw. zu hydraulischen oder latent hydraulischen Bindemitteln
- den Energieverbrauch bei der Bindemittelherstellung verringert, d.h. das bei niedrigen Temperaturen hergestellt wird,
- die Höhe der CO₂-Emissionen senkt,
- eine geringere gesamte oder gleichmäßigere Wärmefreisetzung bei der Hydratation zeigt und
- eine höhere Beständigkeit und Festigkeit der mit diesem Bindemittel hergestellten Bau- bzw. Werkstoffe erzielt.

Diese Aufgabe wird im Hinblick auf das einphasige hydraulische Bindemittel durch die Merkmale des Anspruchs 1, im Hinblick auf das Gemisch durch das Merkmal des Anspruchs 4, im Hinblick auf die Herstellungsverfahren durch die Merkmale eines der Ansprüche 6 bis 8 und im Hinblick den Baustoff durch die Merkmale des Anspruchs 11 gelöst. Die Unteransprüche beschreiben jeweils vorteilhafte Ausgestaltungen der Erfindung.

Das erfindungsgemäße hydraulische Bindemittel ist eine hydraulisch aktive silikatische Verbindung, die Calcium, Silizium und Sauerstoff enthält. Weitere Elemente können ebenfalls Bestandteil des Bindemittels sein und werden nach der Art ihres Einbaus unterschieden: Alkalien, insbesondere Natrium; Erdalkalien, insbesondere Magnesium, oder andere zweiwertige Kationen, insbesondere Fe[+II] und Mangan; dreiwertige Kationen, insbesondere Al[+III], werden, als M[6]^{x+} sechsfach oder höher mit Sauerstoff koordiniert, eingebaut, wobei die M[6]^{x+} das Calcium teilweise ersetzen. Tetraedrisch durch Sauerstoff koordinierte Elemente, insbesondere Phosphor, Aluminium oder Fe³⁺,bilden Sauerstoffanionen und werden als Phosphat, Aluminat oder Ferrat auf tetraedrischen Positionen als M[4]^{y+} eingebaut, wobei sie Silizium höchstens zu 45 Atom% ersetzen. Das amphotere Aluminium eignet sich ebenso wie Magnesium für beide Varianten. Die Hochzahlen x+ und y+ geben jeweils die Ladung des betreffenden Kations an.

Die Stöchiometrie des erfindungsgemäßen hydraulischen Bindemittels wird durch den Bereich des molaren Verhältnisses Ca:Si von 0,2 bis 1,5, besonders bevorzugt von 0,3 und bis unter 1,5, definiert. Die Bestandteile Sauerstoff bzw. Calcium und weitere Elemente sorgen für den Ladungsausgleich. Im Falle, dass ein Teil der Calcium- oder Siliziumatome durch die Substituenten M[6]^{x+}O_{x/2} bzw. M[4]^{y+}O_{y/2} ersetzt ist, wird anstelle des einfachen molaren Ca:Si-Verhältnisses, das identisch ist mit dem molaren (CaO):(SiO₂)-Verhältnis, das modifizierte molare Verhältnis [CaO + (x/2) · (M[6] ^{x+}O_{x/2})]: [SiO₂ + M[4]^{y+}O_{y/2}] angegeben. Der Gehalt an Wasser liegt unterhalb von 3,5 Gew.%.

Das Bindemittel erweist sich nach Röntgenbeugungs-Untersuchungen (Röntgen-Pulverdiffraktometrie) als röntgenamorph, d.h. es ist sehr stark fehlgeordnet.

Silikationen bestehen aus Sauerstofftetraedern, deren Zentrum durch ein tetraedrisch koordiniertes Silizium besetzt ist. Die derart aufgebauten Silikattetraeder sind über gemeinsame Sauerstoff-Atome miteinander verknüpft. Silizium-Atome können in höheren Anteilen durch Aluminium-Atome, zu geringeren Anteilen durch Bor-, Germanium-, Titan-, Eisen-, Beryllium- oder Phosphor-Atome ersetzt sein. Die Struktur der Silikationen im erfindungsgemäßen hydraulischen Bindemittel ist durch eine variable Verknüpfung der Tetraeder gekennzeichnet.

Untersuchungen mit ²⁹Si-Festkörper-NMR-Spektroskopie zeigten eine breite Verteilung des Silikat-Vernetzungsgrades: Es traten NMR-Signale mit den typischen chemischen Verschiebungen für Q⁰ (monomere Silikat-Tetraeder), über Q¹, Q², Q³ bis Q⁴ auf. Die Hochzahl gibt hierbei die Anzahl der mit dem betrachteten Tetraeder über gemeinsame Sauerstoffe verknüpften Tetraedernachbarn an: Q¹ beschreibt ein Silikat-Dimer oder die endständigen Silikat-Tetraeder in einer Kettenanordnung mit Q²-Kettengliedern; Q³ und Q⁴ entsprechen Silikat-Tetraedern mit drei bzw. vier Silikat-Tetraedern als Nachbarn. Die aufgefundene Verteilungsbreite des einphasigen hydraulischen Bindemittels weist einen mittleren Vernetzungsgrad von mindestens Q¹ auf und belegt nicht nur das Vorkommen unterschiedlicher Vernetzungsgrade Qⁿ, sondern auch eine hohe Unordnung der einzelnen Vernetzungstypen.

Die teilweise Substitution von Siliziumatomen durch Atome anderer Netzwerkbildner, insbesondere von Aluminium, Bor, Germanium, Phosphor, Eisen, Beryllium oder Titan, ist möglich. Besonders relevant ist die Aluminium-Substitution, die maximal bis zu einem Ersatz von 45 Atom% des Si durch Al reichen kann.

Die Calciumatome liegen in Form von Ca²⁺-Ionen als Bindungspartner der negativ geladenen Silikat-Einheiten vor. Ein teilweiser Ersatz durch Na-, K-, Li-, Mg-, Sr-, Ba-, Mn-, Fe[+II] - oder Al[+III] -Atome ist möglich.

Die vorliegende Erfindung betrifft also ein einphasiges hydraulisches Bindemittel, das aus hydraulisch aktivem Calciumsilikat besteht. Im Vergleich zu Portlandzement enthält dieses Bindemittel weniger Calcium bzw. weniger Calcium substituierende Elemente, so dass das molare Verhältnis [CaO + (x/2) · (M[6]^{x+}O_{x/2})] : [SiO₂ + M[4]^{y+}O_{y/2}] geringer ist. Dieses hydraulische Bindemittel wird durch Mahlen aus Ausgangsmaterialien hergestellt, die im Mittel bei niedrigeren Temperaturen als Zementklinker erzeugt werden, so dass sich Energieaufwand und Kohlendioxidemissionen verringern.

Die vorliegende Erfindung betrifft weiterhin ein Gemisch, das einen Anteil des erfindungsgemäßen einphasigen hydraulischen Bindemittels umfasst. Der Anteil beträgt vorzugsweise mindestens 10 Gew.%, besonders bevorzugt mindestens 25 Gew.%, insbesondere mindestens 50 Gew.%.

Das Abbinden oder auch das Aushärten findet, wie von Portlandzement bekannt, durch Mischen mit Wasser und gegebenenfalls unter Wasser statt. Durch die Hydratation entsteht ein mechanisch fester Baustoff. Bei der hydraulischen Reaktion des erfindungsgemäßen hydraulischen Bindemittels entsteht kein Portlandit Ca(OH)₂, er ist zu keiner Zeit röntgenographisch nachweisbar. Weiterhin verläuft die Abbindereaktion unter geringerer Wärmefreisetzung als bei der Hydratation von Portlandzement. Die Abbindegeschwindigkeit lässt sich, wie bereits für Portlandzement bekannt, durch die Substitution verschiedener Elemente, die Variation der Verarbeitung (z.B. Mahlen) sowie durch oberflächenaktive Zusätze, wie z.B. organische Zusätze, in einem weiten Bereich einstellen. Das Maximum der Hydratationswärme wird dann nach einem Zeitraum von einigen Minuten oder erst nach mehreren Tagen erreicht.

Beim Abbinden reagiert das erfindungsgemäße hydraulische Bindemittel zu einem Calcium-Silikat-Hydrat C-S-H-Phase. Auf molekularer Ebene ändert sich hierbei die Vernetzung der Silikat-Baueinheiten, auf makroskopischer Ebene findet eine Verfestigung statt. Je nach Zusammensetzung des Ausgangsmaterials enthält das Hydratationsprodukt gegebenenfalls noch weitere Alkalien, Erdalkalien oder andere Elemente, so dass ein Calcium-Silikat-Hydrat mit einem molaren Ca:Si-Verhältnis bzw. einem modifizierten molaren Verhältnis [CaO + (x/2)·(M[6]^{x+}O_{x/2})]: [SiO₂ + M[4]^{y+}O_{y/2}] kleiner 1,5 entsteht. Abgebundener Portlandzement besteht dagegen aus einem C-S-H-Gel (Ze*mentgel)* mit einem molaren Ca:Si-Verhältnis von 1,7 bis 1,8 und enthält zusätzlich Portlandit Ca(OH)₂.

Der erfindungsgemäß aus der Abbindereaktion entstandene Baustoff ist aufgrund der Abwesenheit von Portlandit, aufgrund des im Vergleich zu Zementstein aus Portlandzement geringeren molaren Ca:Si-Verhältnisses und aufgrund der höheren Verknüpfung der Silikat-Baueinheiten chemisch beständiger als Portlandzementstein. Die gemessene Druckfestigkeit nach 28 Tagen überschreitet 20 N/mm². Dieser Wert liegt in der Größenordnung der europäischen Norm EN 197 für Zemente, die 3 verschiedene Klassen für die Festigkeit von 32,5, 42,5 und 52,5 N/mm² angibt.

Falls das erfindungsgemäße Bindemittel weniger als 1% Na₂O enthält kann es gemeinsam mit alkaliempfindlichen Zusätzen wie z.B. anorganischen oder organische Fasern mit geringer Alkalibeständigkeit zu einem erfindungsgemäßen Baustoff umgesetzt werden.

Die Herstellung des erfindungsgemäßen einphasigen hydraulischen Bindemittels oder eines Gemischs, das das erfindungsgemäße einphasige hydraulische Bindemittel enthält, erfolgt durch ein Ko-Vermahlen (Reaktionsmahlen) eines Vorproduktes, das Calcium, Silizium und Sauerstoff mit monomeren oder dimeren Silikat-Baueinheiten enthält (d.h. ein Calcium-Silikat), mit einem festen silikatischen Rohstoff mit hohem Vernetzungsgrad, wie z.B. Quarz oder Quarzsand.

Der erste Ausgangsstoff ist dabei durch die chemischen Elemente Calcium, Silizium und Sauerstoff charakterisiert, die in Form von monomeren oder dimeren Silikat-Einheiten vorliegen.

Der zweite Ausgangsstoff ist ein silikatischer Feststoff, der durch einen hohen Vernetzungsgrad der Silikat-Tetraeder von Q³ bis Q⁴ charakterisiert ist. Darüber hinaus können geringe Mengen an Wasser zugegeben werden.

Das erfindungsgemäße einphasige hydraulische Bindemittel entsteht beim Vermahlen der Ausgangsstoffe in einer Mühle, bevorzugt unter erhöhter Scher- und Druckwirkung, z.B. in einer Scheibenschwingmühle, einer Kugelmühle oder einer Wälzmühle. Die beiden Reaktanden bilden dabei einen neuen Stoff mit einem mittleren Vernetzungsgrad. Der zweite Ausgangsstoff wird beim Ko-Vermahlen depolymerisiert. Das so gebildete einphasige Bindemittel enthält Silikat-Baueinheiten, die einerseits in einem lagerfähigen Zustand gehalten werden und andererseits beim Anmachen des Bindemittels mit Wasser hydraulisch reagieren und zu einem Abbinden, zu einer Verfestigung führen.

Der erste Ausgangsstoff wird in der Regel über eines der im Folgenden erläuterten Verfahren hergestellt:
- Bei der *thermischen* Herstellung bei Temperaturen bis 700°C werden zunächst Alkali-/Erdalkali-Silikate hergestellt, indem Alkaliverbindungen, Erdalkaliverbindungen und Silikate gemeinsam gesintert werden. Als Beispiel dient die Herstellung von CaNa₂SiO₄ aus CaCO₃, Na₂CO₃ und SiO₂:

   CaCO₃ + Na₂CO₃ + SiO₂ → CaNa₂SiO₄ + 2 CO₂.
- Bei der *hydrothermalen* Herstellung in Druckautoklaven bei 140 °C bis 300 °C werden calciumhaltige Rohstoffe wie CaO, CaCO₃ oder Ca(OH)₂ und siliziumhaltige Rohstoffe wie Quarz, Silica, Glimmer, Feldspäte, Altbetone, Gläser oder Schlacken durch direkte Reaktion mit Wasser oder Wasserdampf im Druckautoklaven umgesetzt. Die Zugabe einer Lauge, bevorzugt NaOH oder KOH, ist möglich. Sie stellt den pH-Wert zwischen 11 und 13 ein, erhöht die Reaktionsgeschwindigkeit und erlaubt den Einsatz von langsam reagierenden Silizium-Verbindungen. Anschließend werden die Produkte thermisch entwässert.

Als zweiter Ausgangsstoff (Silikatträger) dient Quarz, Quarzsand oder ein anderer Rohstoff, Sekundärrohstoff oder ein synthetisches Produkt. Beispiele hierfür sind silikatische Gläser, Feldspäte oder Schlacken.

Darüber hinaus ist eine gemeinsame Bildung oder bereits ein vermischtes Vorliegen der beiden Ausgangsstoffe möglich:
a) In-situ Bildung: Der erste Ausgangsstoff wird erst beim Mahlen gebildet und reagiert dann mit dem überschüssigem oder zusätzlichem, hochpolymeren zweiten Ausgangsstoff.
b) Gemischte Ausgangsstoffe: Die beiden Ausgangsstoffe liegen bereits gemeinsam in einer Mischung vor und werden direkt reaktionsvermahlen.

In einer weiteren Ausgestaltung besteht die Möglichkeit der Herstellung von Komposit-Bindemitteln unter Einsatz von Hochofenschlacke, Flugasche, natürlichen Puzzolanen oder herkömmlichem (Portland-)Zement. Letzteres ist dann besonders interessant, wenn der erfindungsgemäße Zement sehr schnell reagiert (Reaktionssteuerung) oder wenn die Mischung der Ausgangsmaterialien mehr Calcium als erforderlich enthält.

Aus einem erfindungsgemäßen hydraulischen Bindemittel gebildete Hydratationsprodukte enthalten Calcium-Silikat-Hydrate mit einem niedrigem molaren Ca:Si-Verhältnis und sind damit chemisch beständiger als C-S-H-Gele in Portlandzementstein, da kein Portlandit gebildet wird und die Silikat-Baueinheiten einen höheren Vernetzungsgrad im Vergleich zu Portlandzementstein aufweisen. Auch liegt an den Kontaktstellen des Bindemittels zum Zuschlag in Mörteln oder Betonen kein verwitterungsempfindlicher Portlandit vor, so dass sich keine Sollbruchstellen im Verbund von Mörteln und Betonen bilden.

Falls das erfindungsgemäße Bindemittel weniger als 1% Na₂O enthält, ist das daraus gebildete Bindemittelgerüst weniger anfällig für sekundär auftretende Alkali-Kieselsäure-Reaktionen, so dass alkaliempfindliche Zuschläge einsetzbar sind.

Die Erfindung wird im Folgenden anhand eines Ausführungsbeispiels näher erläutert.

Als Ausgangsstoffe dienten Belit β-Ca₂SiO₄ und Quarz, feinkörnig, gewaschen und geglüht.

Alternativ wurde Belit gemäß der DE 10 2005 037 771 A1 aus einer Mischung von CaCO₃ und SiO₂ im Verhältnis 2:1 durch mehrfaches Sintern bei 1250°C und zwischenzeitliches Homogenisieren oder durch Entwässern von hydrothermal hergestelltem α-Ca₂SiO₄·H₂O bei 800 °C hergestellt.

Belit wurde anschließend zusammen mit dem Quarz im Massenverhältnis 1:1 (jeweils 1,1 g) in einer Scheibenschwingmühle für 180 Sek. gemahlen. Der Mahlvorgang bewirkte neben einer Veränderung der Korngrößen vor allem eine Reaktion zwischen den Ausgangsstoffen, durch die ein hydraulisches Bindemittel entstand.

Die BET-Oberflächen der Ausgangsstoffe betrugen im Mittel für Belit 0,5 m²/g und für Quarz 2 m²/g, während das Mahlprodukt einen Wert von 1,7 m²/g aufwies. Wurden die Ausgangsstoffe getrennt bei gleicher Einwaage und Mahldauer vermahlen, ergab sich eine mittlere spezifische Oberfläche von 5,2 m²/g. Die gemeinsame Vermahlung führte also unter Reaktion zur Bildung des erfindungsgemäßen Bindemittels, wobei die spezifische Oberfläche um etwa den Faktor 3 reduziert wurde.

IR-spektroskopisch wurde beobachtet, dass die Si-O-Streckschwingung des Belits bei 844 cm⁻¹ und die (Si-O)-Streckschwingungen von Quarz bei 1078 cm⁻¹ durch das Mahlen stark abnehmen. Stattdessen treten breite Banden mit Schwerpunkt bei 936 cm⁻¹ und 1100 cm⁻¹ auf; die Bande bei 936 cm⁻¹ belegt die Bildung eines gering polymerisierten Calciumsilikats.

Dieser Befund wurde durch ²⁹Si-Festkörper-NMR-Untersuchungen bestätigt. Belit besitzt lediglich Q⁰-Silikatspezies. Nach dem Mahlen waren neu ein Q³- und ein breites Q²-Signal vorhanden. Das Q⁴-Signal von Quarz sowie das Q⁰-Signal von Belit nahmen deutlich ab.

Auch die Ergebnisse der Röntgenbeugung belegen die Reaktion und zeigen im hydraulischen Bindemittel lediglich einen breiten erhöhten Untergrund im Bereich von 25° bis 35° 2Θ(Cu-K_{α} Strahlung).

Die Hydratation des hydraulischen Bindemittels wurde mittels eines Wärmeleitfähigkeitskalorimeters verfolgt. Dabei trat ein Maximum der Wärmefreisetzung infolge der Benetzungswärme wenige Sekunden nach Zudosieren des Anmachwassers auf. Anschließend klang die Wärmefreisetzung fast vollständig ab, um schließlich nach einem Minimum bei etwa 25 Min. bis zu einem zweiten Maximum nach ca. 10 Std. anzusteigen. Im Verlauf der nächsten 100 Std. klingt die Wärmefreisetzung langsam ab. Obwohl die Reaktion mit einer geringeren Wärmefreisetzung verbunden ist als die Reaktion von Portlandzementen, wird dennoch bereits nach einigen Stunden eine erhebliche Festigkeit erreicht. Bei einem Verhältnis Wasser zu Bindemittel von 0,3 und Zugabe von drei Teilen Sand zu einem Teil Bindemittel wurde nach 28 Tagen eine Druckfestigkeit von 20 N/mm² überschritten.

Das Q²-NMR-Signal, das das Auftreten der C-S-H-Phase belegt, dominierte das Spektrum des abgebundenen Baustoffs. Es war eine deutliche Intensität der Reflexe im Pulverdiffraktogramm bei 0,305 nm und 0,28 nm sowie die Entstehung eines breiten Reflexes zwischen 1,7 nm und 1,15 nm zu erkennen. Dies beweist, dass im abgebundenen Baustoff ein Calcium-Silikat-Hydrat entsteht. Die Lage der Reflexe zeigt, dass das Calcium-Silikat-Hydrat ein geringeres molares Ca:Si-Verhältnis als C-S-H-Gel aus Portlandzement besitzt.

Schließlich fand sich im IR-Spektrum die (Si-O)-Streckschwingung der C-S-H-Phase bei 970 cm⁻¹, d.h. verschoben zu höheren Wellenzahlen, was einem höheren Vernetzungsgrad entspricht. Außerdem war eine neue Bande bei 668 cm⁻¹ zu erkennen. Diese entspricht einer Si-O-Si-Biegeschwingung, die ein weiterer Beweis für das Auftreten einer hochpolymeren C-S-H-Phase ist.

## Patentansprüche

1. Einphasiges amorphes hydraulisches Bindemittel, das Silizium-, Calcium-, und Sauerstoff-Atome in einer Anordnung enthält, die Silikat-Baueinheiten mit einem mittleren Vernetzungsgrad von mindestens Q¹ umfasst, wobei kein oder ein Teil der Calcium-Atome durch ein sechsfach oder höher mit Sauerstoff koordiniertes Atom M[6]^{x+}, welches ausgewählt ist aus Na-, K-, Li-, Mg-, Sr-, Ba-, Mn-, Fe[+II]- oder Al[+III]-Atomen, und/oder kein oder höchstens 45 Atom% der Silizium-Atome durch ein tetraedrisch mit Sauerstoff koordiniertes Atom M[4]^{y+}, welches ausgewählt ist aus Al-, Ge-, B-, P-, Fe-, Be- oder Ti-Atomen, ersetzt sind, das molare Verhältnis
[CaO + (x/2)·(M[6]^{x+}O_{x/2})SiO₂ + M[4]^{y+}O_{y/2}]
einen Wert von 0,2 bis 1,5 aufweist und das Bindemittel weniger als 3,5 Gew.% Wasser aufweist.

2. Einphasiges hydraulisches Bindemittel nach Anspruch 1, wobei das molare Verhältnis
[CaO + (x/2)·(M[6]^{x+}O_{x/2})]: [SiO₂ + M[4]^{y+}O_{y/2}]
einen Wert von 0,3 bis unter 1,5 aufweist.

3. Einphasiges hydraulisches Bindemittel nach Anspruch 1 oder 2, das nach Zugabe von Wasser zu Hydraten reagiert, wobei mehr als 50 Gew.% der Hydrate Calcium-Silikat-Hydrate mit einem molaren Verhältnis
[CaO + (x/2)·(M[6]^{x+}O_{x/2})]:[SiO₂ + M[4]^{y+}O_{y/2}]
kleiner als 1,5 sind.

4. Gemisch, das ein einphasiges hydraulisches Bindemittel nach einem der Ansprüche 1 bis 3 enthält.

5. Gemisch nach Anspruch 4, das mindestens 10 Gew.% des einphasigen hydraulischen Bindemittels enthält.

6. Verfahren zur Herstellung eines einphasigen hydraulischen Bindemittels nach einem der Ansprüche 1 bis 3 durch
- Reaktionsmahlen eines ersten Ausgangsstoffes, der Calcium-, Silizium-, und Sauerstoff-Atome, die in Form von Silikat-Baueinheiten mit einem Vernetzungsgrad von Q⁰ bis Q² vorliegen, enthält, mit einem zweiten Ausgangsstoff in Form eines festen silikatischen Rohstoffs, der einen Vernetzungsgrad der Silikat-Baueinheiten von Q³ bis Q⁴ aufweist, und,
- solange der Wassergehalt bei 3,5 Gew.% oder höher liegt, Trocknen des einphasigen hydraulischen Bindemittels auf einen Wassergehalt unterhalb von 3,5 Gew.%.

7. Verfahren zur Herstellung eines einphasigen hydraulischen Bindemittels nach einem der Ansprüche 1 bis 3 durch
- Reaktionsmahlen eines Stoffes, der bei der Reaktionsmahlung einen ersten Ausgangsstoff bildet, der Calcium-, Silizium-, und Sauerstoff-Atome, die in Form von Silikat-Baueinheiten mit einem Vernetzungsgrad von Q⁰ bis Q² vorliegen, enthält, mit einem zweiten Ausgangsstoff in Form eines festen silikatischen Rohstoffs, der einen Vernetzungsgrad der Silikat-Baueinheiten von Q³ bis Q⁴ aufweist, und,
- solange der Wassergehalt bei 3,5 Gew.% oder höher liegt, Trocknen des einphasigen hydraulischen Bindemittels auf einen Wassergehalt unterhalb von 3,5 Gew.%.

8. Verfahren zur Herstellung eines Gemisches nach Anspruch 4 oder 5 durch
- Reaktionsmahlen von Rohstoffen, die weitere Materialien zusätzlich zum ersten Ausgangsstoff, der Calcium-, Silizium-, und Sauerstoff-Atome enthält, die in Form von Silikat-Baueinheiten mit einem Vernetzungsgrad von Q⁰ bis Q² vorliegen, oder zusätzlich zum Stoff, der beim Reaktionsmahlen den ersten Ausgangsstoff, der Calcium-, Silizium- und Sauerstoff-Atome enthält, die in Form von Silikat-Baueinheiten mit einem Vernetzungsgrad von Q⁰ bis Q², vorliegen, bildet, oder zusätzlich zum zweiten Ausgangsstoff in Form eines festen silikatischen Rohstoffs, der einen Vernetzungsgrad der Silikat-Baueinheiten von Q³ bis Q⁴ aufweist, enthalten, und,
- solange der Wassergehalt des einphasigen hydraulischen Bindemittels 3,5% oder mehr beträgt, Trocknen des Gemischs, bis das darin enthaltene einphasige hydraulische Bindemittel einen Wassergehalt von weniger als 3,5 Gew.% aufweist.

9. Verfahren nach einem der Ansprüche 6 bis 8, wobei Quarz oder Quarzsand als zweiter Ausgangsstoff eingesetzt wird.

10. Verfahren nach Anspruch 6, 8 oder 9, wobei der erste und der zweite Ausgangsstoff gemeinsam in einem Material vorliegen.

11. Baustoff, hergestellt durch Abbinden des einphasigen hydraulischen Bindemittels nach einem der Ansprüche 1 bis 3 oder des Gemischs nach Anspruch 4 oder 5 mit Wasser und anschließendem Aushärten.

12. Baustoff nach Anspruch 11, der alkaliempfindliche Zusätze enthält.

## Claims

1. A monophase amorphous hydraulic binder containing silicon, calcium and oxygen atoms in an arrangement comprising silicate building units having an average connectedness of at least Q¹, with none or a part of the calcium atoms being substituted for by an atom M[6]^{x+} sixfold or more highly coordinated with oxygen, which is chosen from Na, K, Li, Mg, Sr, Ba, Mn, Fe[+II] or Al[+III] atoms, and/or none or at most 45 atom% of the silicon atoms being substituted for by an atom M[4]^{y+} tetrahedrally coordinated with oxygen, which is chosen from Al, Ge, B, P, Fe, Be or Ti atoms, the molar ratio of
[CaO + (x/2)·(M[6]^{x+}O_{x/2})]: [SiO₂ + M[4]^{y+}O_{y/2}]
having a value of 0.2 to 1.5 and the binder containing less than 3.5% by weight of water.

2. The monophase hydraulic binder of claim 1, said molar ratio of
[CaO + (x/2)·(M[6]^{x+}O_{x/2})]: [SiO₂ + M[4]^{y+}O_{y/2}]
having a value of 0.3 to below 1.5.

3. The monophase hydraulic binder of claim 1 or 2 which reacts to hydrates after adding water, wherein more than 50% by weight of the hydrates are calcium silicate hydrates having a molar ratio of
[CaO + (x/2)·(M[6]^{x+}O_{x/2})]: [SiO₂ + M[4]^{y+}O_{y/2}]
of smaller than 1.5.

4. A mixture containing a monophase hydraulic binder of any one of claims 1 to 3.

5. The mixture of claim 4, containing at least 10% by weight of the monophase hydraulic binder.

6. A method for manufacturing a monophase hydraulic binder of any one of claims 1 to 3 by
- reaction grinding a first starting material containing calcium, silicon and oxygen silicate building units having a connectedness of Q⁰ to Q², with a second starting material in the form of a solid silicate raw material having a connectedness of the silicate building units of Q³ to Q⁴, and,
- as long as the water content is 3.5% by weight or higher, drying the monophase hydraulic binder to a water content of below 3.5% by weight.

7. The method for manufacturing a monophase hydraulic binder of any one of claims 1 to 3 by
- reaction grinding a material, which forms a first starting material during reaction grinding containing calcium, silicon and oxygen atoms present in the form of silicate building units having a connectedness of Q⁰ to Q², with a second starting material in the form of a solid silicate raw material having a connectedness of the silicate building units of Q³ to Q⁴, and,
- as long as the water content is 3.5% by weight or higher, drying the monophase hydraulic binder to a water content of below 3.5% by weight.

8. The method for manufacturing a mixture according to claim 4 or 5 by
- reaction grinding raw materials containing further materials in addition to the first starting material containing calcium, silicon and oxygen atoms present in the form of silicate building units having a connectedness of Q⁰ to Q², or in addition to the material which forms the first starting material during reaction grinding, containing calcium, silicon and oxygen atoms present in the form of silicate building units having a connectedness of Q⁰ to Q², or in addition to the second starting material in the form of a solid silicate raw material having a connectedness of the silicate building units of Q³ to Q⁴, and,
- as long as the water content of the monophase hydraulic binder is 3.5% or more, drying the mixture until the monophase hydraulic binder contained therein has a water content of less than 3.5% by weight.

9. The method of any one of claims 6 to 8, wherein quartz or quartz sand are used as the second starting material.

10. The method of claim 6, 8 or 9, wherein the first and the second raw materials are present together in one material.

11. A building material, manufactured by setting the monophase hydraulic binder of any one of claims 1 to 3 or the mixture of claim 4 or 5 with water and subsequent hardening.

12. The building material of claim 11, containing alkali-sensitive additives.

## Revendications

1. Liant amorphe hydraulique monophasique, qui contient des atomes de silicium, de calcium et d'oxygène dans un agencement, qui comprend des unités constitutives de silicate présentant un degré de réticulation moyen d'au moins Q¹, aucun atome de calcium n'étant remplacé ou une partie des atomes de calcium étant remplacée par un atome M[6]^{x+}, hexacoordiné ou à coordination supérieure avec de l'oxygène, qui est choisi parmi les atomes de Na, de K, de Li, de Mg, de Sr, de Ba, de Mn, de Fe[+II] ou d'Al[+III], et/ou aucun atome de silicium n'étant remplacé ou au plus 45 atm% des atomes de silicium étant remplacé par un atome M[4]^{y+}, coordiné de manière tétraédrique avec de l'oxygène, qui est choisi parmi les atomes d'Al, de Ge, de B, de P, de Fe, de Be ou de Ti, le rapport molaire
[CaO + (x/2) · (M[6]^{x+}O_{x/2})]: [SiO₂ + M[4]^{y+}O_{y/2}]
présentant une valeur de 0,2 à 1,5 et le liant contenant moins de 3,5% en poids d'eau.

2. Liant hydraulique monophasique selon la revendication 1, le rapport molaire
[CaO + (x/2) · (M[6]^{x+}O_{x/2})]: [SiO₂ + M[4]^{y+}O_{y/2}]
présentant une valeur de 0,3 jusqu'à moins de 1,5.

3. Liant hydraulique monophasique selon la revendication 1 ou 2, qui réagit, après addition d'eau, en hydrates, plus de 50% en poids des hydrates étant des hydrates de calcium-silicate présentant un rapport molaire
[CaO + (x/2) · (M[6]^{x+}O_{x/2})]: [SiO₂ + M[4]^{y+}O_{y/2}]
inférieur à 1,5.

4. Mélange, qui contient un liant hydraulique monophasique selon l'une quelconque des revendications 1 à 3.

5. Mélange selon la revendication 4, qui contient au moins 10% en poids du liant hydraulique monophasique.

6. Procédé pour la préparation d'un liant hydraulique monophasique selon l'une quelconque des revendications 1 à 3 par
- broyage réactif d'une première substance de départ, qui contient des atomes de calcium, de silicium et d'oxygène, qui se trouvent sous forme d'unités constitutives de silicate présentant un degré de réticulation de Q⁰ à Q², avec une deuxième substance de départ sous forme d'une matière première silicatée solide, qui présente un degré de réticulation des unités constitutives de silicate de Q³ à Q⁴, et,
- tant que la teneur en eau est 3,5% en poids ou plus, séchage du liant hydraulique monophasique à une teneur en eau inférieure à 3,5% en poids.

7. Procédé pour la préparation d'un liant hydraulique monophasique selon l'une quelconque des revendications 1 à 3 par
- broyage réactif d'une substance, qui forme lors du broyage réactif une première substance de départ, qui contient des atomes de calcium, de silicium et d'oxygène, qui se trouvent sous forme d'unités constitutives de silicate présentant un degré de réticulation de Q⁰ à Q², avec une deuxième substance de départ sous forme d'une matière première silicatée solide, qui présente un degré de réticulation des unités constitutives de silicate de Q³ à Q⁴, et,
- tant que la teneur en eau est 3,5% en poids ou plus, séchage du liant hydraulique monophasique à une teneur en eau inférieure à 3,5% en poids.

8. Procédé pour la préparation d'un mélange selon la revendication 4 ou 5, par
- broyage réactif de matières premières qui contiennent d'autres matériaux en plus de la première substance de départ, qui contient des atomes de calcium, de silicium et d'oxygène, qui se trouvent sous forme d'unités constitutives de silicate présentant un degré de réticulation de Q⁰ à Q², ou en plus de la substance qui forme, lors du broyage réactif, la première substance de départ, qui contient des atomes de calcium, de silicium et d'oxygène, qui se trouvent sous forme d'unités constitutives de silicate présentant un degré de réticulation de Q⁰ à Q², ou en plus de la deuxième substance de départ sous forme d'une matière première silicatée solide, qui présente un degré de réticulation des unités constitutives de silicate de Q³ à Q⁴, et,
- tant que la teneur en eau du liant hydraulique monophasique est 3,5% ou plus, séchage du mélange jusqu'à ce que le liant hydraulique monophasique qui y est contenu présente une teneur en eau de moins de 3,5% en poids.

9. Procédé selon l'une quelconque des revendications 6 à 8, dans lequel on utilise du quartz ou du sable de quartz comme deuxième substance de départ.

10. Procédé selon la revendication 6, 8 ou 9, dans lequel la première et la deuxième substance de départ se trouvent ensemble dans un matériau.

11. Matériau de construction, préparé par prise du liant hydraulique monophasique selon l'une quelconque des revendications 1 à 3 ou du mélange selon la revendication 4 ou 5 avec de l'eau et durcissement consécutif.

12. Matériau de construction selon la revendication 11, qui contient des additifs sensibles aux alcalis.
